# EUROPÄISCHE PATENTSCHRIFT

(11) **EP 4 143 937 B1**
(45) Veröffentlichungstag und Bekanntmachung des Hinweises auf die Patenterteilung: **24.01.2024**
(21) Anmeldenummer: 21711593.0
(22) Anmeldetag: 17.03.2021
(51) Int. Cl.: H02H 11/00, B60R 16/03

(54) **FAHRZEUGSCHALTUNGSANORDNUNG**
VEHICLE CIRCUIT ARRANGEMENT
AGENCEMENT DE CIRCUIT DE VÉHICULE

(30) Priorität: 30.04.2020 EP 20172324
(43) Veröffentlichungstag der Anmeldung: 08.03.2023
(73) Patentinhaber: ZKW Group GmbH, 3250 Wieselburg (AT)
(72) Erfinder: GUTH, Christian, 7433 Mariasdorf (AT)
(74) Vertreter: Patentanwaltskanzlei Matschnig & Forsthuber OG
(86) Internationale Anmeldenummer: PCT/EP2021/056847
(87) Internationale Veröffentlichungsnummer: WO 2021/219288

(56) Entgegenhaltungen:
- EP-A1- 2 713 492
- EP-A2- 1 193 824
- DE-A1-102013 222 862
- US-A- 5 519 557

## Beschreibung

Die Erfindung betrifft eine Fahrzeugschaltungsanordnung zur elektrischen Versorgung eines ersten elektrischen Verbrauchers eines Fahrzeuges mit einer gegenüber einer Fahrzeugbordspannung abwärts gewandelten Spannung und zur ergänzenden verpolungssicheren Versorgung zumindest eines zweiten elektrischen Verbrauchers mit einer ungewandelten Fahrzeugbordspannung, wobei der zweite elektrische Verbraucher ein Steuergerät zur Steuerung einer Fahrzeugfunktion umfasst, wobei die Fahrzeugschaltungsanordnung einen Fahrzeugbordspannungseingang zur Zufuhr der Fahrzeugbordspannung und einen mit dem Fahrzeugbordspannungseingang elektrisch verbindbaren Linearregler umfasst, der zur Ausgabe der gegenüber der Fahrzeugbordspannung abwärts gewandelten Spannung zur elektrischen Versorgung des ersten Verbrauchers eingerichtet ist. Eine bekannte Fahrzeugschaltungsanordnung zur elektrischen Versorgung eines Verbrauchers eines Fahrzeuges ist zum Beispiel aus der DE10 2013 222862 A bekannt.

Weiters betrifft die Erfindung ein elektrisches Fahrzeugsystem umfassend eine erfindungsgemäße Fahrzeugschaltungsanordnung und eine Fahrzeugbatterie zur Ausgabe der Fahrzeugbordspannung, wobei die Fahrzeugbatterie mit dem Fahrzeugbordspannungseingang der Fahrzeugschaltungsanordnung elektrisch verbunden ist.

Ebenso betrifft die Erfindung einen Fahrzeugscheinwerfer, umfassend eine erfindungsgemäße Fahrzeugschaltungsanordnung. Weiters betrifft die Erfindung ein Fahrzeug, umfassend eine erfindungsgemäße Fahrzeugschaltungsanordnung und/oder ein erfindungsgemäßes Fahrzeugsystem und/oder einen erfindungsgemäßen Fahrzeugscheinwerfer.

Zur Versorgung von Logikschaltungen (z.B. in Form einer OnBoard-Logik), Microkontrollern, OnBoard-ICs, etc. ist es bei Fahrzeugen erforderlich, die von einer Fahrzeugbatterie zur Verfügung gestellte Fahrzeugbordspannung (die übrigens Schwankungen unterworfen sein kann), auf das für diese Verbraucher erforderliche Spannungsniveau zu reduzieren. Typischerweise wird dabei eine Bordspannung von 12 V auf eine Versorgungsspannung in Höhe von 5V oder 3,3 V reduziert. Zur Reduktion dieser Spannung werden Linearregler eingesetzt (die z.B. Bestandteil eines System-Basis-Chips SBC sein können). Solche Linearregler umfassen beispielsweise einen Transistor, der dergestalt in Serie zu dem lastseitigen Verbraucher geregelt wird, dass die gewünschte Spannungsdifferenz zwischen Bordspannung und Versorgungsausgang an dem Linearregler abfällt (z.B. 7V bzw. 8,7 V bei den vorherigen Beispielen). Dieser Spannungsabfall führt zu beträchtlichen Wärmeverlusten an dem Linearregler.

Ein weiterer Nachteil des Standes der Technik besteht darin, dass üblicherweise aufwendige SBCs mit entsprechend komplexen High-Side-Switch eingesetzt werden mussten, um einen Verpolschutz von direkt mit Fahrzeugbordspannung versorgten Verbrauchern - wie z.B. von Steuergeräten - zu realisieren. Die hierfür eingesetzten High-Side-Switch-Schaltungen sind sehr kostenintensiv.

Eine Aufgabe der Erfindung besteht darin, eine Schaltungsanordnung zu schaffen, die genannten Nachteile des Standes der Technik überwindet. Diese Aufgabe wird mit einer Fahrzeugschaltungsanordnung der eingangs genannten Art gelöst, indem erfindungsgemäß die Fahrzeugschaltungsanordnung ferner einen mit dem Fahrzeugbordspannungseingang verbundenen vom Linearregler gesonderten DCDC-Spannungswandler mit einem Spannungsausgang aufweist, wobei der Spannungsausgang mit dem Linearregler zur elektrischen Versorgung des Linearreglers verbunden ist, wobei der DCDC-Spannungswandler zur Ausgabe einer gegenüber der zuführbaren Fahrzeugbordspannung gesenkten Grundspannung und einer gegenüber der zuführbaren Fahrzeugbordspannung erhöhten Spannung auf denselben Spannungsausgang eingerichtet ist, wobei die erhöhte Spannung und die Grundspannung getaktet in einem Zeitdauerverhältnis ausgegeben werden, wobei die gesenkte Grundspannung größer oder gleich der abwärts gewandelten Spannung des Linearreglers ist, wobei die zweite Last mit dem Fahrzeugbordspannungseingang über einen in Serie geschalteten n-Kanal Mosfet verbunden ist, der als Verpolschutz vorgesehen ist, wobei der Source-Anschluss des n-Kanal Mosfets mit dem Fahrzeugbordspannungseingang verbunden ist, der Drain-Anschluss des n-Kanal Mosfets mit der zweiten Last verbunden ist und das Gate des n-Kanal Mosfets durch die gegenüber der Fahrzeugbordspannung erhöhten Spannung bei Vorliegen korrekter Polung der Fahrzeugbordspannung dauerhaft über den DCDC-Wandler versorg- und durchsteuerbar ist, indem zwischen dem Spannungsausgang des DCDC-Wandlers und dem Gate des n-Kanal Mosfets eine Diode zur gerichteten Versorgung des Gates geschaltet ist, und das Gate zudem mit einem Kondensator verbunden ist, der die durch die Diode zugeführte erhöhte Spannung glättet und damit bei korrekter Polung ein dauerhaftes Durchschalten des n-Kanal Mosfets ermöglicht, wobei im Falle der Verpolung der Fahrzeugbordspannung an dem Fahrzeugbordspannungseingang der n-Kanal Mosfet mangels Durchsteuerung des Gates automatisch sperrt und damit den zweiten Verbraucher elektrisch von dem Fahrzeugbordspannungseingang und damit von der verpolten Fahrzeugbordspannung trennt.

Durch die erfindungsgemäße Fahrzeugschaltungsanordnung werden mehrere Nachteile des Standes der Technik gleichzeitig behoben: Einerseits ermöglicht die interne Ausgabe einer gegenüber der Fahrzeugbordspannung reduzierten Grundspannung eine deutliche Reduktion bis hin zur vollkommenen Vermeidung von Verlusten an dem Linearregler. Wird nämlich die Grundspannung beispielsweise 1% oberhalb der Ausgangsspannung des Linearreglers gewählt, z.B. 5,05 V für eine Ausgangsspannung von 5,0 V, so ergibt sich daraus eine Reduktion des Spannungsabfalls an dem Linearregler von beispielsweise ursprünglich 7V (im Falle einer Bordspannung in Höhe von 12V) hin zu nunmehr 0,05 V. Die Reduktion der Verluste an dem Linearregler erfolgt in diesem Beispiel um den Faktor 140. Die Verluste am DCDC-Wandler sind grundsätzlich äußerst gering, da dieser für die möglichst verlustfreie Wandlung der Spannungen optimiert ist und hierfür elektrische und/oder magnetische Energiespeicher aufweist, die zur effizienten Wandlung der Spannungsniveaus eingesetzt werden. Der Einsatz eines DCDC-Wandlers wird in der Erfindung zusätzlich technisch genutzt, um eine gegenüber der Grundspannung erhöhte Spannung auszugeben. Die Ausgabe erfolgt dabei getaktet, und zwar wechselweise mit der Grundspannung. Die erhöhte Spannung wird typischerweise nur kurzzeitig ausgegeben, sodass nur geringfügige zusätzliche Verlustleistungen an dem Linearregler verursacht werden. Die erhöhte Spannung wird zur Durchsteuerung eines High-Side-Switches in Form eines n-Kanal-Mosfets genutzt, der zwischen einem Fahrzeugbordspannungseingang und der mit Bordspannung zur versorgenden Last geschaltet ist, und zwar in Serie zu dieser Last.

Auf diese Weise erlaubt die erfindungsgemäße Fahrzeugschaltungsanordnung sowohl eine energieeffizientere Versorgung von Logikschaltungen mit der abwärts gewandelten Spannung als auch die Umsetzung eines leistungseffizienten kostengünstigen Verpolschutzes für Verbraucher, die direkt mit der Fahrzeugbordspannung versorgt werden sollen. Bei einem solchen Verbraucher kann es sich z.B. um ein Steuergerät handeln, das leistungsintensive elektrische Verbraucher, wie z.B. LEDs eines Fahrzeugscheinwerfers, elektrisch versorgt und ansteuert.

Der Ausdruck "vom Linearregler gesonderter DCDC-Spannungswandler" bedeutet, dass der DCDC-Spannungswandler nicht in den Linearregler integriert ist, sondern gesondert ausgebildet ist.

Das automatische Sperren des n-Kanal Mosfets im Falle einer Verpolung erklärt sich dadurch, dass z.B. in Abhängigkeit von der Ausgestaltung des DCDC-Wandlers, entweder die verpolte Spannung an das Gate weitergereicht wird und der Mosfet dadurch sperrt, oder der DCDC-Wandler bei Verpolung einfach keinen Betrieb aufnimmt und keine Spannungen ausgibt. Die erfindungsgemäße Verwendung eines n-Kanal-Mosfets weist einen enormen Kostenvorteil gegenüber einer Verwendung eines p-Kanal-Mosfets auf. Durch die Erfindung kann auf den Einsatz eines komplexen kostspieligen SBCs mit integrierten Hochsetzsteller verzichtet werden. Es können herkömmliche SBCs mit einfachen Linearreglern verwendet werden und dennoch wird ein Verpolschutz für die ungewandelte Bordspannung ermöglicht.

Anders ausgedrückt, kann die vorliegende Erfindung auch als Spannungsvorwandler mit modulierter Highside MOSFET Ansteuerung bezeichnet werden.

Insbesondere kann vorgesehen sein, dass der DCDC-Wandler dergestalt ausgebildet und angesteuert ist, dass die erhöhte Spannung zumindest 3V oberhalb einer zugeführten Bordspannung liegt. Auf diese Weise kann ein vollständiges und effizientes Durchsteuern des n-Kanal-Mosfets sichergestellt werden. Die erhöhte Spannung kann z.B. zwischen 19V und 30V, insbesondere zwischen 22V und 28 V, optional genau 25V, betragen. Weiters kann vorgesehen sein, dass die Grundspannung zwischen 3V und 10V, insbesondere 5 V, beträgt.

Insbesondere kann vorgesehen sein, dass die Grundspannung dergestalt gewählt ist, dass die Differenz aus Grundspannung und der abwärts gewandelten Spannung des Linearreglers im Volllastbetrieb maximal 0,5V beträgt. Unter Volllastbetrieb wird ein Betrieb des Linearreglers verstanden, in dem dieser seine maximale Ausgangsspannung, also z.B. 5V oder 3,3V ausgibt. Das bedeutet, dass die Grundspannung in diesem Fall maximal 5,5V bzw. 3,8V beträgt. Auf diese Weise können Verluste an Linearregler minimiert werden. Technisch gesehen können auch maximal Werte bis 5V zulässig sein, wobei abhängig von der Last an der Digitalspannung auch geringere Werte erlaubt sein können. Die Verluste als Produkt aus Strom und Spannung sollten im Rahmen von maximal 1 Watt bleiben. Auch kann der Linearregler je nach Bedarf natürlich abweichend vom Volllastbetrieb niedrigere Spannungen ausgeben, wodurch die Spannungsabfälle an dem Linearregler gegenüber der Grundspannung in diesem Betriebszustand deutlich über 0,5V betragen können.

Weiters kann vorgesehen sein, dass die Fahrzeugschaltungsanordnung zudem den ersten Verbraucher und den zweiten Verbraucher umfasst.

Insbesondere kann vorgesehen sein, dass der DCDC-Spannungswandler mit dem Steuergerät verbunden und durch dieses steuerbar ist.

Weiters kann vorgesehen sein, dass der DCDC-Spannungswandler dazu eingerichtet ist, dass die erhöhte Spannung und die Grundspannung durch den DCDC-Spannungswandler getaktet in einem Zeitdauerverhältnis ausgegeben werden, wobei im Normalbetrieb der Tastgrad der erhöhten Spannung zwischen 0,05% und 5%, insbesondere zwischen 0,1% und 1% liegt und für die verbleibende Zeitdauer die Grundspannung ausgegeben wird.

Insbesondere kann vorgesehen sein, dass der DCDC-Spannungswandler dazu eingerichtet ist, dass die erhöhte Spannung und die Grundspannung durch den DCDC-Spannungswandler getaktet in einem Zeitdauerverhältnis ausgegeben werden, wobei die Fahrzeugschaltungsanordnung ferner dazu eingerichtet ist, die verpolungssichere Versorgung des zumindest einen zweiten elektrischen Verbrauchers in einem Teilbetrieb zumindest zwischenzeitlich einzustellen, indem der Tastgrad zur Ausgabe der erhöhten Spannung gegen 0% gesenkt wird, sodass das Gate des n-Kanal-Mosfets Q1 nach Abfallen der Spannung an dem Kondensator nicht mehr durchgesteuert wird. Dadurch kann das Abschalten eines Leistungszweiges des Steuergeräts durch Abschalten der höheren Spannung erfolgen, wobei diese Abschaltung wiederum durch das Steuergerät vorgegeben werden kann. Der Tastgrad der erhöhten Spannung kann auch hierfür tatsächlich auf 0% gesenkt werden, sodass die erhöhte Spannung für eine vorgebbare Zeitdauer überhaupt nicht ausgegeben wird.

Weiters kann vorgesehen sein, dass die von dem DCDC-Spannungswandler an den Spannungsausgang ausgegebenen Spannungen zwischen 5 V und 25 V liegen.

Insbesondere kann vorgesehen sein, dass eine dritte Last vorgesehen ist, die entweder parallel zu der zweiten Last geschaltet ist, oder über den Fahrzeugbordspannungseingang in Serie zu einem weiteren analog verschalteten n-Kanal Mosfet versorgt ist, wobei Drain- und Source-Anschluss dieses n-Kanal Mosfets gegenüber dem die zweite Last versorgenden n-Kanal Mosfets vertauscht sind.

Weiters kann vorgesehen sein, dass die Fahrzeugschaltungsanordnung dazu eingerichtet ist, über den Fahrzeugbordspannungseingang mit einer Spannung zwischen 8V und 19V versorgt zu werden. Damit ist die Fahrzeugschaltungsanordnung für die Verwendung in herkömmlichen PKWs mit Verbrennungsmotoren optimiert. Alternativ dazu kann die Fahrzeugschaltungsanordnung auch für den Einsatz bei LKWs optimiert werden, wobei hierbei die geeigneten Eingangsspannungen entsprechend erhöht werden müssen.

Insbesondere kann vorgesehen sein, dass der DCDC-Spannungswandler ein SEPIC-Wandler ist.

Weiters kann vorgesehen sein, dass der DCDC-Spannungswandler ein kaskadierter Ab-Aufwärtswandler ist.

Weiters betrifft die Erfindung ein elektrisches Fahrzeugsystem umfassend eine erfindungsgemäße Fahrzeugschaltungsanordnung und eine Fahrzeugbatterie zur Ausgabe der Fahrzeugbordspannung, wobei die Fahrzeugbatterie mit dem Fahrzeugbordspannungseingang der Fahrzeugschaltungsanordnung elektrisch verbunden ist.

Ebenso betrifft die Erfindung einen Fahrzeugscheinwerfer, umfassend eine erfindungsgemäße Fahrzeugschaltungsanordnung. Weiters betrifft die Erfindung ein Fahrzeug, umfassend eine erfindungsgemäße Fahrzeugschaltungsanordnung und/oder ein erfindungsgemäßes Fahrzeugsystem und/oder einen erfindungsgemäßen Fahrzeugscheinwerfer.

Die Erfindung ist im Folgenden anhand einer beispielhaften und nicht einschränkenden Ausführungsform näher erläutert, die in den Figuren veranschaulicht ist. Darin zeigt
Figur 1 eine schematische Darstellung eines Ersatzschaltbildes einer erfindungsgemäßen Fahrzeugschaltungsanordnung, und
Figur 2 eine schematische Darstellung der Funktionsweise der erfindungsgemäßen Fahrzeugschaltungsanordnung.

In den folgenden Figuren bezeichnen - sofern nicht anders angegeben - gleiche Bezugszeichen gleiche Merkmale.

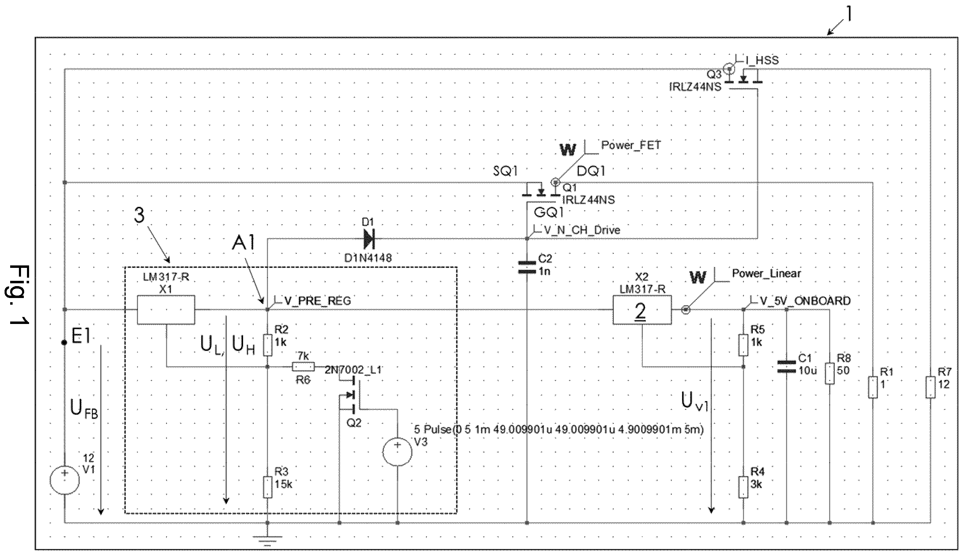

Figur 1 zeigt eine schematische Darstellung eines Ersatzschaltbildes einer erfindungsgemäßen Fahrzeugschaltungsanordnung 1. Die Fahrzeugschaltungsanordnung 1 ist zur elektrischen Versorgung eines ersten elektrischen Verbrauchers R8 eines Fahrzeuges mit einer gegenüber einer Fahrzeugbordspannung U_{FB} abwärts gewandelten Spannung Uᵥ₁ und zur ergänzenden verpolungssicheren Versorgung zumindest eines zweiten elektrischen Verbrauchers R1 mit einer ungewandelten Fahrzeugbordspannung U_{FB} eingerichtet. Der zweite elektrische Verbraucher R1 umfasst ein in den Figuren nicht dargestelltes Steuergerät zur Steuerung einer Fahrzeugfunktion. Bei dem Steuergerät kann es sich um ein herkömmliches Steuergerät handeln, das ohnehin in einem Fahrzeug vorhanden ist. Bei der Fahrzeugfunktion kann es sich beispielsweise um die Funktion von einem Fahrzeugscheinwerfer und/oder auch um eine einfache Lüfterfunktion handeln.

Die Fahrzeugschaltungsanordnung 1 umfasst einen Fahrzeugbordspannungseingang E1 zur Zufuhr der Fahrzeugbordspannung U_{FB} und einen mit dem Fahrzeugbordspannungseingang E1 elektrisch verbindbaren Linearregler 2 zur Ausgabe der gegenüber der Fahrzeugbordspannung U_{FB} abwärts gewandelten Spannung Uᵥ₁ zur elektrischen Versorgung des ersten Verbrauchers R8. In Fig. 1 sind noch weitere Verbraucher C1, R5 und R4 dargestellt, die aber für die Grundfunktion der Erfindung ohne Relevanz sind, weshalb auf diese Komponenten nicht näher eingegangen wird.

Die Fahrzeugschaltungsanordnung 1 weist ferner einen mit dem Fahrzeugbordspannungseingang E1 verbundenen vom Linearregler 2 gesonderten DCDC-Spannungswandler 3 mit einem Spannungsausgang A1 auf. Dieser Wandler 3 ist in Figur 1 durch eine in einem punktierten Rechteck dargestellten Ersatzschaltung schematisch erkennbar. Der Spannungsausgang A1 ist mit dem Linearregler 2 zur elektrischen Versorgung des Linearreglers 2 verbunden. Der DCDC-Spannungswandler 3 ist zur wechselweisen Ausgabe einer gegenüber der zuführbaren Fahrzeugbordspannung U_{FB} gesenkten Grundspannung U_{L} und einer gegenüber der zuführbaren Fahrzeugbordspannung U_{FB} erhöhten Spannung U_{H} auf denselben Spannungsausgang A1 eingerichtet. Die erhöhte Spannung U_{H} und die Grundspannung U_{L} werden getaktet in einem Zeitdauerverhältnis ausgegeben, wobei die gesenkte Grundspannung U_{L} größer oder gleich der abwärts gewandelten Spannung des Linearreglers Uᵥ₁ ist.

Die zweite Last R1 ist mit dem Fahrzeugbordspannungseingang E1 über einen in Serie geschalteten n-Kanal Mosfet Q1 verbunden, der als Verpolschutz vorgesehen ist. Dabei ist der der Source-Anschluss SQ1 des n-Kanal Mosfets Q1 mit dem Fahrzeugbordspannungseingang E1 verbunden. Der Drain-Anschluss DQ1 des n-Kanal Mosfets Q1 ist mit der zweiten Last R1 verbunden. Das Gate GQ1 des n-Kanal Mosfets Q1 ist durch die gegenüber der Fahrzeugbordspannung U_{FB} erhöhte Spannung U_{H} bei Vorliegen korrekter Polung der Fahrzeugbordspannung U_{FB} dauerhaft über den DCDC-Wandler 3 versorg- und durchsteuerbar. Dies erfolgt, indem zwischen dem Spannungsausgang A1 des DCDC-Wandlers 3 und dem Gate GQ1 des n-Kanal Mosfets Q1 eine Diode D1 zur gerichteten Versorgung des Gates GQ1 geschaltet ist, und das Gate GQ1 zudem mit einem Kondensator C2 verbunden ist, der die durch die Diode D1 zugeführte erhöhte Spannung U_{H} glättet und damit bei korrekter Polung ein dauerhaftes Durchschalten des n-Kanal Mosfets Q1 ermöglicht, indem die Gate-Source Spannung in entsprechender Höhe (z.B. 3 V) positiv ist. Im Falle der Verpolung der Fahrzeugbordspannung U_{FB} an dem Fahrzeugbordspannungseingang E1 wird der n-Kanal Mosfet Q1 mangels Durchsteuerung des Gates GQ1 automatisch gesperrt. Damit wird der zweite Verbraucher R1 elektrisch von dem Fahrzeugbordspannungseingang E1 und damit ebenso von einer verpolten Fahrzeugbordspannung -U_{FB} getrennt.

Der DCDC-Wandler ist vorzugsweise dergestalt ausgebildet und angesteuert, dass die erhöhte Spannung U_{H} zumindest 3V oberhalb einer zugeführten Bordspannung U_{FB} liegt. Der DCDC-Spannungswandler 3 kann zu seiner Ansteuerung z.B. mit dem bereits erwähnten Steuergerät verbunden sein. Die Grundspannung U_{L} kann beispielsweise zwischen 3V und 10V betragen. Zur Minimierung von Energieverlusten am Linearregler 2 kann vorgesehen sein, dass die Grundspannung U_{L} dergestalt gewählt ist, dass die Differenz aus Grundspannung U_{L} und der abwärts gewandelten Spannung des Linearreglers Uᵥ₁ maximal 0,5V beträgt.

Insbesondere kann vorgesehen sein, dass der DCDC-Spannungswandler 3 dazu eingerichtet ist, die erhöhte Spannung U_{H} und die Grundspannung U_{L} durch den DCDC-Spannungswandler 3 getaktet, also wechselweise in einem bestimmten Zeitdauerverhältnis, auszugeben. Dabei kann z.B. in einem Normalbetrieb der Tastgrad der erhöhten Spannung zwischen 0,05% und 5%, insbesondere zwischen 0,1% und 1% liegen und für die verbleibende Zeitdauer die Grundspannung U_{L} ausgegeben werden.

Auch kann vorgesehen sein, dass die Fahrzeugschaltungsanordnung 1 ferner dazu eingerichtet ist, die verpolungssichere Versorgung des zumindest einen zweiten elektrischen Verbrauchers R1 in einem Teilbetrieb zumindest zwischenzeitlich einzustellen, indem der Tastgrad zur Ausgabe der erhöhten Spannung UH gegen 0% gesenkt wird, sodass das Gate GQ1 des n-Kanal-Mosfets Q1 nach Abfallen der Spannung an dem Kondensator C2 nicht mehr durchgesteuert wird. Die von dem DCDC-Spannungswandler 3 an den Spannungsausgang A1 ausgegebenen Spannungen können z.B. zwischen 5 V und 25 V liegen.

Auch kann vorgesehen sein, dass eine dritte Last R7 vorgesehen ist, die entweder parallel zu der zweiten Last R1 geschaltet ist, oder über den Fahrzeugbordspannungseingang E1 in Serie zu einem weiteren analog verschalteten n-Kanal Mosfet Q3 versorgt ist, wobei Drain- und Source-Anschluss dieses n-Kanal Mosfets Q3 gegenüber dem die zweite Last versorgenden n-Kanal Mosfets Q1 vertauscht sind. Q3 dient in diesem Fall als High-Side-Switch im Gegensatz zu Q1, der als Verpolschutz eingesetzt wird. Beim Verpolschutz soll die Body-Diode des FET bei Verpolung nicht leiten. Bei Q3 soll die Body-Diode im Normalbetrieb nicht leiten (Ein/ Ausschalten von Q3).

Die Fahrzeugschaltungsanordnung 1 kann dazu eingerichtet sein, über den Fahrzeugbordspannungseingang E1 mit einer Spannung zwischen 8V und 19V versorgt zu werden.

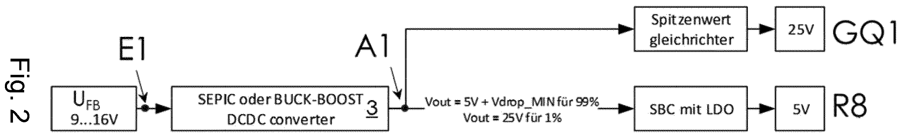

Figur 2 zeigt eine schematische Darstellung der Funktionsweise der erfindungsgemäßen Fahrzeugschaltungsanordnung. Darin ist erkennbar, wie Fahrzeugbordspannung U_{FB} auf zwei unterschiedliche Spannungsniveaus gewandelt wird, die mit zeitlicher Taktung dem Ausgang A1 wechselweise zugeführt werden.

Die Erfindung betrifft des Weiteren ein in den Figuren nicht dargestelltes elektrisches Fahrzeugsystem, umfassend eine Fahrzeugschaltungsanordnung 1 nach einem der vorhergehenden Ansprüche und eine Fahrzeugbatterie zur Ausgabe der Fahrzeugbordspannung, wobei die Fahrzeugbatterie mit dem Fahrzeugbordspannungseingang E1 der Fahrzeugschaltungsanordnung 1 elektrisch verbunden ist. Ferner betrifft die Erfindung einen in den Figuren nicht dargestellten Fahrzeugscheinwerfer, umfassend eine erfindungsgemäße Fahrzeugschaltungsanordnung 1. Auch betrifft die Erfindung ein Fahrzeug, umfassend eine erfindungsgemäße Fahrzeugschaltungsanordnung 1, ein erfindungsgemäßes Fahrzeugsystem und/oder einen erfindungsgemäßen Fahrzeugscheinwerfer.

Die Erfindung ist nicht auf die gezeigten Ausführungsformen beschränkt, sondern durch den gesamten Schutzumfang der Ansprüche definiert. Etwaige Bezugszeichen in den Ansprüchen sind beispielhaft und dienen nur der einfacheren Lesbarkeit der Ansprüche, ohne diese einzuschränken.

## Patentansprüche

1. Fahrzeugschaltungsanordnung (1) zur elektrischen Versorgung eines ersten elektrischen Verbrauchers (R8) eines Fahrzeuges mit einer gegenüber einer Fahrzeugbordspannung (U_{FB}) abwärts gewandelten Spannung (Uᵥ₁) und zur ergänzenden verpolungssicheren Versorgung zumindest eines zweiten elektrischen Verbrauchers (R1) mit einer ungewandelten Fahrzeugbordspannung (U_{FB}), wobei der zweite elektrische Verbraucher (R1) ein Steuergerät zur Steuerung einer Fahrzeugfunktion umfasst, wobei die Fahrzeugschaltungsanordnung (1) folgendes umfasst:
- einen Fahrzeugbordspannungseingang (E1) zur Zufuhr der Fahrzeugbordspannung (U_{FB}),
- einen mit dem Fahrzeugbordspannungseingang (E1) elektrisch verbindbaren Linearregler (2) zur Ausgabe der gegenüber der Fahrzeugbordspannung (U_{FB}) abwärts gewandelten Spannung (Uᵥ₁) zur elektrischen Versorgung des ersten Verbrauchers (R8),
**dadurch gekennzeichnet, dass**
die Fahrzeugschaltungsanordnung (1) ferner
- einen mit dem Fahrzeugbordspannungseingang (E1) verbundenen vom Linearregler (2) gesonderten DCDC-Spannungswandler (3) mit einem Spannungsausgang (A1) aufweist, wobei der Spannungsausgang (A1) mit dem Linearregler (2) zur elektrischen Versorgung des Linearreglers (2) verbunden ist,
wobei der DCDC-Spannungswandler (3) zur Ausgabe einer gegenüber der zuführbaren Fahrzeugbordspannung (U_{FB}) gesenkten Grundspannung (U_{L}) und einer gegenüber der zuführbaren Fahrzeugbordspannung erhöhten Spannung (U_{H}) auf denselben Spannungsausgang (A1) eingerichtet ist, wobei die erhöhte Spannung (U_{H}) und die Grundspannung (U_{L}) getaktet in einem Zeitdauerverhältnis ausgegeben werden, wobei die gesenkte Grundspannung (U_{L}) größer oder gleich der abwärts gewandelten Spannung des Linearreglers (Uᵥ₁) ist,
wobei die zweite Last (R1) mit dem Fahrzeugbordspannungseingang (E1) über einen in Serie geschalteten n-Kanal Mosfet (Q1) verbunden ist, der als Verpolschutz vorgesehen ist, wobei der Source-Anschluss (SQ1) des n-Kanal Mosfets (Q1) mit dem Fahrzeugbordspannungseingang (E1) verbunden ist, der Drain-Anschluss (DQ1) des n-Kanal Mosfets (Q1) mit der zweiten Last (R1) verbunden ist und das Gate (GQ1) des n-Kanal Mosfets (Q1) durch die gegenüber der Fahrzeugbordspannung (U_{FB}) erhöhten Spannung (U_{H}) bei Vorliegen korrekter Polung der Fahrzeugbordspannung (U_{FB}) dauerhaft über den DCDC-Wandler versorg- und durchsteuerbar ist, indem zwischen dem Spannungsausgang (A1) des DCDC-Wandlers (4) und dem Gate (GQ1) des n-Kanal Mosfets (Q1) eine Diode (D1) zur gerichteten Versorgung des Gates (GQ1) geschaltet ist, und das Gate (GQ1) zudem mit einem Kondensator (C2) verbunden ist, der die durch die Diode (D1) zugeführte erhöhte Spannung glättet und damit bei korrekter Polung ein dauerhaftes Durchschalten des n-Kanal Mosfets (Q1) ermöglicht, wobei im Falle der Verpolung der Fahrzeugbordspannung (U_{FB}) an dem Fahrzeugbordspannungseingang (E1) der n-Kanal Mosfet (Q1) mangels Durchsteuerung des Gates (GQ1) automatisch sperrt und damit den zweiten Verbraucher (R1) elektrisch von dem Fahrzeugbordspannungseingang (E1) und damit von der verpolten Fahrzeugbordspannung (U_{FB}) trennt.

2. Fahrzeugschaltungsanordnung (1) nach Anspruch 1, wobei der DCDC-Wandler dergestalt ausgebildet und angesteuert ist, dass die erhöhte Spannung (U_{H}) zumindest 3V oberhalb einer zugeführten Bordspannung liegt.

3. Fahrzeugschaltungsanordnung (1) nach einem der vorhergehenden Ansprüche, wobei die Grundspannung (U_{L}) zwischen 3V und 10V, insbesondere 5 V, beträgt.

4. Fahrzeugschaltungsanordnung (1) nach einem der vorhergehenden Ansprüche, wobei die gesenkte Grundspannung (U_{L}) dergestalt gewählt ist, dass die Differenz aus Grundspannung (U_{L}) und der abwärts gewandelten Spannung des Linearreglers (Uᵥ₁) im Volllastbetrieb maximal 0,5V beträgt.

5. Fahrzeugschaltungsanordnung (1) nach einem der vorhergehenden Ansprüche, wobei die Fahrzeugschaltungsanordnung (1) zudem den ersten Verbraucher (R8) und den zweiten Verbraucher (R1) umfasst.

6. Fahrzeugschaltungsanordnung (1) nach Anspruch 5, wobei der DCDC-Spannungswandler (3) mit dem Steuergerät verbunden und durch dieses steuerbar ist.

7. Fahrzeugschaltungsanordnung (1) nach einem der vorhergehenden Ansprüche, wobei der DCDC-Spannungswandler (3) dazu eingerichtet ist, dass die erhöhte Spannung (U_{H}) und die Grundspannung (U_{L}) durch den DCDC-Spannungswandler (3) getaktet in einem Zeitdauerverhältnis ausgegeben werden, wobei im Normalbetrieb der Tastgrad der erhöhten Spannung zwischen 0,05% und 5%, insbesondere zwischen 0,1% und 1% liegt und für die verbleibende Zeitdauer die Grundspannung (U_{L}) ausgegeben wird.

8. Fahrzeugschaltungsanordnung (1) nach einem der vorhergehenden Ansprüche, wobei der DCDC-Spannungswandler (3) dazu eingerichtet ist, dass die erhöhte Spannung (U_{H}) und die Grundspannung (U_{L}) durch den DCDC-Spannungswandler (3) getaktet in einem Zeitdauerverhältnis ausgegeben werden, wobei die Fahrzeugschaltungsanordnung (1) ferner dazu eingerichtet ist, die verpolungssichere Versorgung des zumindest einen zweiten elektrischen Verbrauchers (R1) in einem Teilbetrieb zumindest zwischenzeitlich einzustellen, indem der Tastgrad zur Ausgabe der erhöhten Spannung (U_{H}) gegen 0% gesenkt wird, sodass das Gate (GQ1) des n-Kanal-Mosfets Q1 nach Abfallen der Spannung an dem Kondensator (C2) nicht mehr durchgesteuert wird.

9. Fahrzeugschaltungsanordnung nach einem der vorhergehenden Ansprüche, wobei die von dem DCDC-Spannungswandler (3) an den Spannungsausgang (A1) ausgegebenen Spannungen zwischen 5 V und 25 V liegen.

10. Fahrzeugschaltungsanordnung (1) nach einem der vorhergehenden Ansprüche, wobei eine dritte Last (R7) vorgesehen ist, die entweder parallel zu der zweiten Last geschaltet ist, oder über den Fahrzeugbordspannungseingang (E1) in Serie zu einem weiteren analog verschalteten n-Kanal Mosfet (Q3) versorgt ist, wobei Drain- und Source-Anschluss dieses n-Kanal Mosfets (Q3) gegenüber dem die zweite Last versorgenden n-Kanal Mosfets (Q1) vertauscht sind.

11. Fahrzeugschaltungsanordnung (1) nach einem der vorhergehenden Ansprüche, wobei die Fahrzeugschaltungsanordnung (1) dazu eingerichtet ist, über den Fahrzeugbordspannungseingang (E1) mit einer Spannung zwischen 8V und 19V versorgt zu werden.

12. Fahrzeugschaltungsanordnung (1) nach einem der vorhergehenden Ansprüche, wobei der DCDC-Spannungswandler (3) ein SEPIC-Wandler ist.

13. Fahrzeugschaltungsanordnung (1) nach Anspruch 1 bis 11, wobei der DCDC-Spannungswandler (3) ein kaskadierter Ab-Aufwärtswandler ist.

14. Elektrisches Fahrzeugsystem, umfassend eine Fahrzeugschaltungsanordnung nach einem der vorhergehenden Ansprüche und eine Fahrzeugbatterie zur Ausgabe der Fahrzeugbordspannung, wobei die Fahrzeugbatterie mit dem Fahrzeugbordspannungseingang (E1) der Fahrzeugschaltungsanordnung (1) elektrisch verbunden ist.

15. Fahrzeugscheinwerfer, umfassend eine Fahrzeugschaltungsanordnung (1) nach einem der vorhergehenden Ansprüche.

16. Fahrzeug, umfassend eine Fahrzeugschaltungsanordnung (1) nach einem der Ansprüche 1 bis 12 ein Fahrzeugsystem nach Anspruch 14 und/oder einen Fahrzeugscheinwerfer nach Anspruch 15.

## Claims

1. Vehicle circuit arrangement (1) for the electrical supply of a first electrical load (R8) of a vehicle with a voltage (Uv1) which is down-converted with respect to a vehicle on-board voltage (UFB) and for the supplementary reverse-polarity protected supply of at least one second electrical load (R1) with an unconverted vehicle on-board voltage (UFB), the second electrical load (R1) comprising a control device for controlling a vehicle function, the vehicle circuit arrangement (1) comprising the following:
- a vehicle on-board voltage input (E1) for supplying the vehicle on-board voltage (UFB),
- a linear regulator (2), which can be electrically connected to the vehicle on-board voltage input (E1), for outputting the voltage (Uv1), which has been converted downwards with respect to the vehicle on-board voltage (UFB), for the electrical supply of the first load (R8),
**characterized in that**
the vehicle circuit arrangement (1) further comprises
- has a DCDC voltage converter (3) which is connected to the vehicle on-board voltage input (E1) and is separate from the linear regulator (2) and has a voltage output (A1), the voltage output (A1) being connected to the linear regulator (2) for the electrical supply of the linear regulator (2),
the DCDC voltage converter (3) being set up for outputting a basic voltage (UL) which is lower than the supplyable vehicle on-board voltage (UFB) and a voltage (UH) which is higher than the supplyable vehicle on-board voltage to the same voltage output (A1), the increased voltage (UH) and the basic voltage (UL) being output in a clocked manner in a time-duration ratio, the lowered basic voltage (UL) being greater than or equal to the down-converted voltage of the linear regulator (Uv1),
wherein the second load (R1) is connected to the vehicle on-board voltage input (E1) via a series-connected n-channel mosfet (Q1), which is provided as reverse polarity protection, wherein the source terminal (SQ1) of the n-channel mosfet (Q1) is connected to the vehicle on-board voltage input (E1), the drain terminal (DQ1) of the n-channel mosfet (Q1) is connected to the second load (R1) and the gate (GQ1) of the n-channel mosfet (Q1) can be permanently supplied and controlled via the DCDC converter by the voltage (UH), which is higher than the vehicle on-board voltage (UFB), if the polarity of the vehicle on-board voltage (UFB) is correct, **in that** a diode (D1) is connected between the voltage output (A1) of the DCDC converter (4) and the gate (GQ1) of the n-channel mosfet (Q1) for the directional supply of the gate (GQ1), and the gate (GQ1) is also connected to a capacitor (C2), which smoothes the increased voltage supplied by the diode (D1) and thus enables the n-channel mosfet (Q1) to be permanently switched through when the polarity is correct, whereby in the event of reverse polarity of the vehicle on-board voltage (UFB) at the vehicle on-board voltage input (E1), the n-channel mosfet (Q1) automatically blocks in the absence of through-control of the gate (GQ1) and thus electrically isolates the second load (R1) from the vehicle on-board voltage input (E1) and thus from the reverse-polarity vehicle on-board voltage (UFB).

2. Vehicle circuit arrangement (1) according to claim 1, wherein the DCDC converter is designed and controlled in such a way that the increased voltage (UH) is at least 3 V above a supplied on-board voltage.

3. Vehicle circuit arrangement (1) according to one of the preceding claims, wherein the basic voltage (UL) is between 3 V and 10 V, in particular 5 V.

4. Vehicle circuit arrangement (1) according to one of the preceding claims, wherein the lowered basic voltage (UL) is selected in such a way that the difference between the basic voltage (UL) and the down-converted voltage of the linear regulator (Uv1) is at most 0.5 V in full-load operation.

5. Vehicle circuit arrangement (1) according to one of the preceding claims, wherein the vehicle circuit arrangement (1) further comprises the first load (R8) and the second load (R1).

6. Vehicle circuit arrangement (1) according to claim 5, wherein the DCDC voltage converter (3) is connected to and controllable by the control unit.

7. Vehicle circuit arrangement (1) according to one of the preceding claims, wherein the DCDC voltage converter (3) is set up so that the increased voltage (UH) and the basic voltage (UL) are output by the DCDC voltage converter (3) clocked in a time duration ratio, wherein in normal operation the duty cycle of the increased voltage is between 0.05% and 5%, in particular between 0.1% and 1%, and the basic voltage (UL) is output for the remaining time duration.

8. Vehicle circuit arrangement (1) according to one of the preceding claims, wherein the DCDC voltage converter (3) is set up so that the increased voltage (UH) and the basic voltage (UL) are output by the DCDC voltage converter (3) clocked in a time-duration ratio, wherein the vehicle circuit arrangement (1) is furthermore set up so as to the reverse polarity protected supply of the at least one second electrical load (R1) in a partial operation is set at least in the meantime, in that the duty cycle for outputting the increased voltage (UH) is reduced towards 0%, so that the gate (GQ1) of the n-channel mosfet Q1 is no longer controlled after the voltage at the capacitor (C2) drops.

9. Vehicle circuit arrangement according to one of the preceding claims, wherein the voltages output by the DCDC voltage converter (3) to the voltage output (A1) are between 5 V and 25 V.

10. Vehicle circuit arrangement (1) according to one of the preceding claims, wherein a third load (R7) is provided, which is either connected in parallel with the second load or is supplied via the vehicle on-board voltage input (E1) in series with a further analog-connected n-channel mosfet (Q3), wherein the drain and source connection of this n-channel mosfet (Q3) are interchanged with respect to the n-channel mosfet (Q1) supplying the second load.

11. Vehicle circuit arrangement (1) according to one of the preceding claims, wherein the vehicle circuit arrangement (1) is set up to be supplied with a voltage between 8V and 19V via the vehicle on-board voltage input (E1).

12. Vehicle circuit arrangement (1) according to one of the preceding claims, wherein the DCDC voltage converter (3) is a SEPIC converter.

13. Vehicle circuit arrangement (1) according to claim 1 to 11, wherein the DCDC voltage converter (3) is a cascaded buck-boost converter.

14. Electric vehicle system comprising a vehicle circuit arrangement according to any of the preceding claims and a vehicle battery for outputting the vehicle on-board voltage, wherein the vehicle battery is electrically connected to the vehicle on-board voltage input (E1) of the vehicle circuit arrangement (1).

15. Vehicle headlamp, comprising a vehicle circuit arrangement (1) according to one of the preceding claims.

16. Vehicle, comprising a vehicle circuit arrangement (1) according to one of claims 1 to 12, a vehicle system according to claim 14 and/or a vehicle headlamp according to claim 15.

## Revendications

1. Agencement de circuit de véhicule (1) pour l'alimentation électrique d'un premier consommateur électrique (R8) d'un véhicule avec une tension (Uv1) convertie vers le bas par rapport à une tension de bord de véhicule (UFB) et pour l'alimentation complémentaire protégée contre l'inversion de polarité d'au moins un deuxième consommateur électrique (R1) avec une tension de bord de véhicule (UFB) non convertie, le deuxième consommateur électrique (R1) comprenant un appareil de commande pour la commande d'une fonction du véhicule, l'agencement de circuit de véhicule (1) comprenant ce qui suit :
- une entrée de tension de bord de véhicule (E1) pour l'alimentation de la tension de bord de véhicule (UFB),
- un régulateur linéaire (2) pouvant être relié électriquement à l'entrée de tension de bord du véhicule (E1) pour délivrer la tension (Uv1) convertie vers le bas par rapport à la tension de bord du véhicule (UFB) pour l'alimentation électrique du premier consommateur (R8),
**caractérisé en ce que**
le circuit de véhicule (1) comprend en outre
- présente un convertisseur de tension DCDC (3) relié à l'entrée de tension de bord du véhicule (E1), séparé du régulateur linéaire (2), avec une sortie de tension (A1), la sortie de tension (A1) étant reliée au régulateur linéaire (2) pour l'alimentation électrique du régulateur linéaire (2),
le convertisseur de tension DCDC (3) étant conçu pour délivrer sur la même sortie de tension (A1) une tension de base (UL) abaissée par rapport à la tension de bord du véhicule (UFB) pouvant être amenée et une tension (UH) augmentée par rapport à la tension de bord du véhicule pouvant être amenée, la tension augmentée (UH) et la tension de base (UL) étant délivrées de manière cadencée dans un rapport de durée, la tension de base abaissée (UL) étant supérieure ou égale à la tension convertie vers le bas du régulateur linéaire (Uv1),
la deuxième charge (R1) étant reliée à l'entrée de tension de bord du véhicule (E1) par l'intermédiaire d'un Mosfet à canal n (Q1) monté en série, qui est prévu comme protection contre l'inversion de polarité, la borne de source (SQ1) du Mosfet à canal n (Q1) étant reliée à l'entrée de tension de bord du véhicule (E1), la borne de drain (DQ1) du Mosfet à canal n (Q1) est reliée à la deuxième charge (R1) et la grille (GQ1) du Mosfet à canal n (Q1) peut être alimentée et commandée en permanence par le convertisseur DCDC grâce à la tension (UH) plus élevée que la tension de bord du véhicule (UFB) en présence d'une polarité correcte de la tension de bord du véhicule (UFB), **en ce qu'**une diode (D1) est montée entre la sortie de tension (A1) du convertisseur DCDC (4) et la grille (GQ1) du Mosfet à canal n (Q1) pour l'alimentation dirigée de la grille (GQ1), et la grille (GQ1) est en outre reliée à un condensateur (C2) qui lisse la tension accrue amenée par la diode (D1) et permet ainsi, en cas de polarité correcte, une interconnexion permanente du Mosfet à canal n (Q1), dans lequel, en cas d'inversion de la polarité de la tension de bord du véhicule (UFB) à l'entrée de tension de bord du véhicule (E1), le mosfet à canal n (Q1) est automatiquement bloqué faute d'activation de la grille (GQ1) et sépare ainsi électriquement le deuxième consommateur (R1) de l'entrée de tension de bord du véhicule (E1) et donc de la tension de bord du véhicule (UFB) à polarité inversée.

2. Agencement de circuit de véhicule (1) selon la revendication 1, dans lequel le convertisseur DCDC est conçu et commandé de telle sorte que la tension élevée (UH) est supérieure d'au moins 3V à une tension de bord amenée.

3. Agencement de circuit de véhicule (1) selon l'une des revendications précédentes, dans lequel la tension de base (UL) est comprise entre 3V et 10V, notamment 5V.

4. Agencement de circuit de véhicule (1) selon l'une des revendications précédentes, la tension de base abaissée (UL) étant choisie de telle sorte que la différence entre la tension de base (UL) et la tension abaissée du régulateur linéaire (Uv1) soit au maximum de 0,5 V en fonctionnement à pleine charge.

5. Agencement de circuit de véhicule (1) selon l'une des revendications précédentes, dans lequel l'agencement de circuit de véhicule (1) comprend en outre le premier consommateur (R8) et le deuxième consommateur (R1).

6. Agencement de circuit de véhicule (1) selon la revendication 5, dans lequel le convertisseur de tension DCDC (3) est relié à l'appareil de commande et peut être commandé par celui-ci.

7. Agencement de circuit de véhicule (1) selon l'une des revendications précédentes, dans lequel le convertisseur de tension DCDC (3) est agencé pour que la tension élevée (UH) et la tension de base (UL) soient délivrées par le convertisseur de tension DCDC (3) de manière cadencée dans un rapport de durée, dans lequel, en fonctionnement normal, le taux d'impulsions de la tension élevée est compris entre 0,05% et 5%, en particulier entre 0,1% et 1%, et la tension de base (UL) est délivrée pour la durée restante.

8. Agencement de circuit de véhicule (1) selon l'une des revendications précédentes, dans lequel le convertisseur de tension DCDC (3) est adapté pour que la tension augmentée (UH) et la tension de base (UL) soient délivrées de manière cadencée par le convertisseur de tension DCDC (3) dans un rapport de durée, l'agencement de circuit de véhicule (1) étant en outre adapté pour , de régler l'alimentation protégée contre l'inversion de polarité de l'au moins un deuxième consommateur électrique (R1) dans un fonctionnement partiel, au moins entre-temps, en abaissant le taux d'impulsions pour la sortie de la tension augmentée (UH) vers 0%, de sorte que la grille (GQ1) du Mosfet à n canaux Q1 n'est plus commandée après la chute de la tension aux bornes du condensateur (C2).

9. Agencement de circuit de véhicule selon l'une des revendications précédentes, dans lequel les tensions délivrées par le convertisseur de tension DCDC (3) à la sortie de tension (A1) sont comprises entre 5 V et 25 V.

10. Agencement de circuit de véhicule (1) selon l'une des revendications précédentes, dans lequel il est prévu une troisième charge (R7) qui est soit connectée en parallèle à la deuxième charge, soit alimentée par l'intermédiaire de l'entrée de tension de bord de véhicule (E1) en série avec un autre Mosfet à canal n (Q3) connecté de manière analogique, les bornes de drain et de source de ce Mosfet à canal n (Q3) étant inversées par rapport au Mosfet à canal n (Q1) alimentant la deuxième charge.

11. Agencement de circuit de véhicule (1) selon l'une quelconque des revendications précédentes, dans lequel l'agencement de circuit de véhicule (1) est adapté pour être alimenté par une tension comprise entre 8V et 19V via l'entrée de tension de véhicule (E1).

12. Agencement de circuit de véhicule (1) selon l'une quelconque des revendications précédentes, dans lequel le convertisseur de tension DCDC (3) est un convertisseur SEPIC.

13. Agencement de circuit de véhicule (1) selon les revendications 1 à 11, dans lequel le convertisseur de tension DCDC (3) est un convertisseur abaisseur-élévateur en cascade.

14. Système électrique de véhicule comprenant un circuit de véhicule selon l'une quelconque des revendications précédentes et une batterie de véhicule pour délivrer la tension de bord du véhicule, la batterie de véhicule étant connectée électriquement à l'entrée de tension de bord de véhicule (E1) du circuit de véhicule (1).

15. Phare de véhicule comprenant un ensemble de circuits de véhicule (1) selon l'une quelconque des revendications précédentes.

16. Véhicule comprenant un ensemble de circuits de véhicule (1) selon l'une quelconque des revendications 1 à 12, un système de véhicule selon la revendication 14 et/ou un projecteur de véhicule selon la revendication 15.
